# EUROPEAN PATENT SPECIFICATION

(11) **EP 4 011 711 B1**
(45) Date of publication and mention of the grant of the patent: **19.02.2025**
(21) Application number: 20213237.9
(22) Date of filing: 10.12.2020
(51) Int. Cl.: B60R 21/217, B60R 21/215, B60R 21/205

(54) **VEHICLE GAS BAG SYSTEM**
GASSACKSYSTEM FÜR FAHRZEUGE
SYSTÈME DE SAC À GAZ DE VÉHICULE

(43) Date of publication of application: 15.06.2022
(73) Proprietor: Faurecia Innenraum Systeme GmbH, 76767 Hagenbach (DE); ZF Automotive Germany GmbH, 73553 Alfdorf (DE)
(72) Inventor: Tromp, Stefan, 76767 Hagenbach (DE); Schmid, Jürgen, 73553 Alfdorf (DE); Vanel, Eric, 76767 Hagenbach (DE); Monnier, Gwenaël, 76767 Hagenbach (DE); Petit, Laurent, 76767 Hagenbach (DE)
(74) Representative: Prinz & Partner mbB

(56) References cited:
- EP-A1- 2 236 361
- EP-A1- 2 439 112
- US-A1- 2018 056 915
- US-A1- 2018 186 327
- US-A1- 2019 225 182

## Description

The invention relates to a vehicle gas bag system comprising a fabric housing for receiving a gas bag that can be mounted at an interior panel of a vehicle, in particular an instrument panel.

It is known to mount a housing of a gas bag module below the instrument panel so that the gas bag deploys through a deployment opening that opens at a spilt line in the instrument panel when the gas bag module is activated.

Generic EP 2 236 361 A1 shows an airbag housing mounted beneath an instrument panel. The housing is made from two fabric layers. One of the fabric layers surrounds the folded airbag, while the other extends as a reinforcement layer beneath the instrument panel and is fixed to the instrument panel by coating. Two free ends of the housing extend laterally beneath the instrument panel and are fixed to the instrument panel by clamping between the panel and an armature.

EP 2 439 112 A1 shows a cover for an airbag housing, where a flap in the instrument panel is provided with a fabric hinge embedded in the panel and the airbag cover. The fabric is differently textured in the embedded section and the hinge section.

US 2019/0225182 A1 shows an airbag cover in an instrument panel with an embedded fabric layer having weakening holes.

It is an object of the invention to provide a lightweight and low-cost vehicle gas bag system comprising a housing for holding the gas bag module, which housing can be easily and securely connected to the interior panel.

This object is achieved by a gas bag system comprising the features of claim 1.

The plastic material cover preferably is configured as a plate covering the side of the fabric housing that is directed towards the vehicle interior when the vehicle gas bag system is installed in the vehicle. Preferably, the plastic material cover is used for fixation of the fabric housing at the interior panel, more in particular for fixation at the carrier part of the interior panel. The plastic material cover may have the shape of a plate and may be inserted into a hole of the carrier part of the interior panel such that at least a main part of the fabric housing is arranged at the back side of the interior panel which usually is the instrument panel.

The first and second fabric element preferably form the fabric housing that is designed to enclose at least partly the gas bag.

In general, an interior panel defines a visible lining of the vehicle interior. Such a visible lining is usually comprising a decorative skin that is covering the carrier part of the interior panel and the plastic material cover. A foam layer may be arranged in between the decorative skin on one side and the carrier and the plate on the other side.

The predetermined split line can be a weakening in the plastic material cover, in a foam layer or a decorative layer of the interior panel or in two or more of the plastic material cover, the foam layer and the decorative layer. The split line may also be defined solely by the weakening line of the first fabric element.

The fabric housing, in particular the second fabric element, may serve as a deployment chute for the gas bag. In contrast to state-of-the-art housings for gas bags, there is in addition to the fabric housing that has in large areas the flexibility typical for fabrics, no rigid housing for holding the gas bag.

The fabric housing is saving expenses for a rigid container and contributes to a weight reduction.

The first fabric element and the second fabric element may be made out of the same fabric or out of different fabrics. Because the two fabric elements are separate elements before being connected, there is the opportunity to use different fabrics for the first and second fabric element. Another advantage of two fabric elements is that the second fabric element can be connected with the first fabric element after the central area of the first fabric element has been embedded in or overmolded with the plastic material cover. This allows a more flexible and easy manufacturing of the gas bag system.

The second fabric element may be configured as to hold the gas bag via the plastic material cover at the interior panel. For this purpose, such a second fabric element comprises a bottom and a side wall extending from the bottom towards the plastic material cover and, after assembly with the interior panel carrier, towards the interior panel. The side wall may be a closed surrounding or, for example, may be configured as two opposite wall parts. The second fabric has in particular the function of holding the gas bag before its deployment and for guiding the gas bag in an upward direction, that is in the direction of the vehicle interior, during deployment.

The first fabric element may close the housing part formed by the second fabric element at an upper side containing the central area that is opposite to the bottom of the second fabric element before deployment of the gas bag. At deployment of the gas bag the first fabric element will open to allow deployment of the gas bag in the direction of the vehicle interior for protection of an occupant, in particular the occupant sitting on a front seat of the vehicle, for example an occupant sitting at a passenger seat beside a driver.

The weakened zone of the first fabric element may be a zone in which the fabric is perforated. The weakened zone of the first fabric element may also be a zone of the fabric element with a different weaving structure than the surrounding zones of the first fabric element.

The first and the second fabric elements are separate fabric pieces that are connected to form the housing, e.g. by sewing, gluing or welding. The second fabric element may comprise two fabric parts that are connected for example by sewing, gluing, melting, or welding after the gas bag has been arranged inside the housing.

The central area of the first fabric element and an end section of the second fabric element are embedded in or overmolded with the plastic material cover. This means that the first and, optionally, second fabric element are bonded with the plastic material and cannot be removed from the plastic material without damage. The plastic material may completely cover the central area of the first fabric element and, optionally, the end section of the second fabric element. In other embodiments the central area of the first fabric element and, optionally, the end section of the second fabric element may partly protrude out of the plastic material.

Only the upper part of the fabric housing, that is the portion of the fabric housing that is closing the hole in the interior panel after assembly, is overmolded with or embedded in the plastic material, while the remaining parts of the fabric housing, in particular the bottom part and the side walls are not covered with the plastic material.

The fabric housing may be manufactured with little effort when the connection sections of the first fabric element are formed by end sections of the first fabric element that are connected, for instance by sewing, glueing, or vibration welding with the second fabric element, preferably free ends of the second fabric element.

An especially high stability of the connection of the housing to the interior panel is achieved when the first and second fabric elements consist of a gas bag fabric. This gas bag fabric may be the same fabric as used for the gas bag. The gas bag fabric of the fabric elements may be made of the same material but having different mechanical properties, for example the fabric elements may be thicker. In other embodiments the first fabric element, the second fabric element or both fabric elements may be made out of different fabrics. No additional hinge nets are necessary, as the gas bag fabric is easily able to take up the forces on opening of the flap or flaps and to keep the flap or flaps connected to the housing and the interior panel.

Preferably, the plastic material cover is configured as a plate that is covering a hole in the carrier of the interior panel. So, it can be considered to be a part of the interior panel and may permanently fix the first fabric element and so also the fabric housing to the interior panel. The interior panel can be the instrument panel of the vehicle so that the central area is permanently fixed to the instrument panel and defines part of it.

Prior to deployment of the gas bag, the first fabric element should extend continuously over the split line. The first fabric element extends on both sides of the split line and e.g. covers the split line on the underside of the interior panel, i.e. at the side opposite to the side visible for a vehicle occupant. The weakened zone of the first fabric element consists for instance of perforations or thin portions as is known in the art so that the first fabric element is weakened, but still continuous. The weakened zone of the first fabric element may be woven differently from other zones of the first fabric element. For example, the distance between the warp yarns and/or distance between the weft yarns may be different, in particular may be larger than in other zones of the fabric. The weakened zone of the first fabric elements defines a preferred location for starting the opening of the housing at the deployment of the gas bag.

By overmolding or embedding of the first fabric element with or in the plastic material cover, the fabric housing is directly and permanently connected to the interior panel when this plastic material cover is directly and permanently connected to the interior panel. Preferably, the fabric housing remains connected to the interior panel in case of gas bag deployment. More in particular, the first fabric element remains connected to the flap such that the flap remains being connected to the other parts of the interior panel. Opening forces resulting from deployment of the gas bag can easily be transferred into the adjacent portions of the panel. The weakened zone usually is designed to rupture on unfolding of the gas bag to allow deployment of the gas bag into a vehicle interior through the interior panel.

Preferably, at least one hinge section is provided in the first fabric element between the central area and the connection section, the hinge section being aligned with a predetermined hinge line of the flap in the interior panel, i.e. the hinge section is arranged immediately behind the hinge line of the flap in a view from the top of the interior panel. On deployment of the gas bag, the flap pivots about the hinge line to create the deployment opening for the gas bag. During this pivoting, the interior panel may break at the position of the hinge line such that the flap stays connected with the interior panel only via the hinge section. The hinge line may be a weakening of the plastic material cover or it may be a virtual line defining the position of the pivoting.

Preferably, the hinge section of the first fabric element is not embedded in or overmolded by the plastic material but remains freely movable relative to the first fabric element and so relative to the interior panel to allow for the necessary movement range of the flap. The hinge section must be sufficiently flexible to allow the pivoting of the flap on deployment of the gas bag. In an embodiment in which the gas bag system is arranged in the instrument panel of a vehicle, the hinge may for example allow the flap to pivot in the direction of the wind shield.

In a preferred embodiment, the hinge section comprises an S-shaped folded section, the S-shaped folded section being fixed in an S-shape prior to deployment of the gas bag. The folded section of the first fabric element allows a better opening of the flap during employment of the gas bag. In particular when the plastic material cover breaks during the deployment of the gas bag, the folded hinge provides extra material that allows the flap to pivot sufficiently far away from the opening while remaining connected to the interior panel.

In particular, the S-shape is fixed so that the fixation is ruptured when the gas bag is deployed.

The fixation of the S-shape may e.g. be realized as a rupturable seam. When the flap opens, the hinge section can unfold and provide the necessary movement range for the flap. Alternatively, the fixation may be realized by gluing.

The plastic material cover may comprise a single hinge line along which the flap pivots during deployment of the gas bag. Often, such an embodiment is referred to as an U-shaped flap. In another embodiment, the flap may comprise two hinge lines at opposite sides of a rectangular shaped flap. During employment of the gas bag, the flap breaks in the middle and two flap parts pivot in opposite direction. The first flap part pivots around a first hinge line and the second flap part pivots around a second hinge line that is parallel to the first hinge line. Such an embodiment is often referred to as a H-shaped flap. Preferably, a corresponding hinge section is provided for each flap part in the first fabric element.

For instance, two S-shaped folded sections may be provided in two hinge sections on opposite sides of the weakened zone, each S-shaped folded section being arranged between a connection section and the central area of the first fabric element, and each S-shaped folded section being aligned with one of the hinge lines in the interior panel.

This design is in particular suitable for a split line in the shape of an H. However, the split line may have any other suitable shape, e.g. the shape of a U or Y. The hinge sections and hinge lines have to be arranged correspondingly e.g. in the plastic material and/or interior panel.

To additionally secure the gas bag system to the interior panel, the central area of the first fabric element may be arranged between two outer free ends of the second fabric element that are connected to the plastic material cover by overmolding or embedding. In this case, the second fabric element has two opposite free outer ends that form attachment sections that are embedded in or overmolded with the plastic material. By attaching the plastic material cover, more in particular the edge regions of the cover to the interior panel, also the gas bag system is attached to the interior panel. These attachment sections are distanced from the edges of the first fabric element forming the connection sections. In this way, both the first fabric element and the second fabric element contain areas that are embedded in or overmolded by the plastic material cover and allow a good fixation to the interior panel.

According to one embodiment, the hinge section is arranged laterally between the attachment section and the central area, while the attachment section is laterally distanced from both the deployment opening and the hinge line.

Insertion of an inflator and a gas bag package into the fabric housing may be facilitated when the second fabric element consists of two mirror symmetrical cuttings that are each permanently connected to each other at a second fabric connection section after insertion of the gas bag. The insertion of the gas bag may also be facilitated by an opening in the second fabric element. The inflator configured for initiating the deployment of the gas bag may be arranged inside the fabric housing or it may be arranged outside the fabric housing.

The second fabric connection section can be placed at the side of the housing opposite from the central area of the first fabric element, i.e. at the bottom of the fabric housing, and may be realized e.g. as a seam.

The design described above is most suitable for a front seat passenger gas bag system, however, the gas bag system could also be realized as any other suitable kind of gas bag system, e.g. as a knee gas bag system or a side gas bag system.

In the following, several embodiments of the invention will be described in detail with reference to the enclosed drawings. In the drawings
- Figure 1 schematically shows an arrangement of a gas bag system in an interior panel, e.g. an instrument panel of a vehicle according to the invention;
- Figure 2 shows a partial sectional view of the interior panel in a section through the gas bag system of Fig. 1, comprising a gas bag and inflator; and
- Figure 3 shows details of Fig. 2 in a sectional view.

The figures show a vehicle gas bag system 10 that is integrated into or part of an interior panel 12, e.g. an instrument panel of a vehicle (not shown in further detail) which is also denoted by the reference number 12 for easier readability. The instrument panel 12 is an example of an interior panel defining a visible lining of the vehicle interior.

The gas bag system 10 is mounted at the instrument panel 12 so that it is not visible for the vehicle occupants in the vehicle's interior. Actually, the gas bag system 10 is mounted at the back side of the instrument panel 12, and a plastic material cover 14 and a carrier part of the instrument panel 12 are covered with a decorative skin. The skin may be a leather skin or a slush skin.

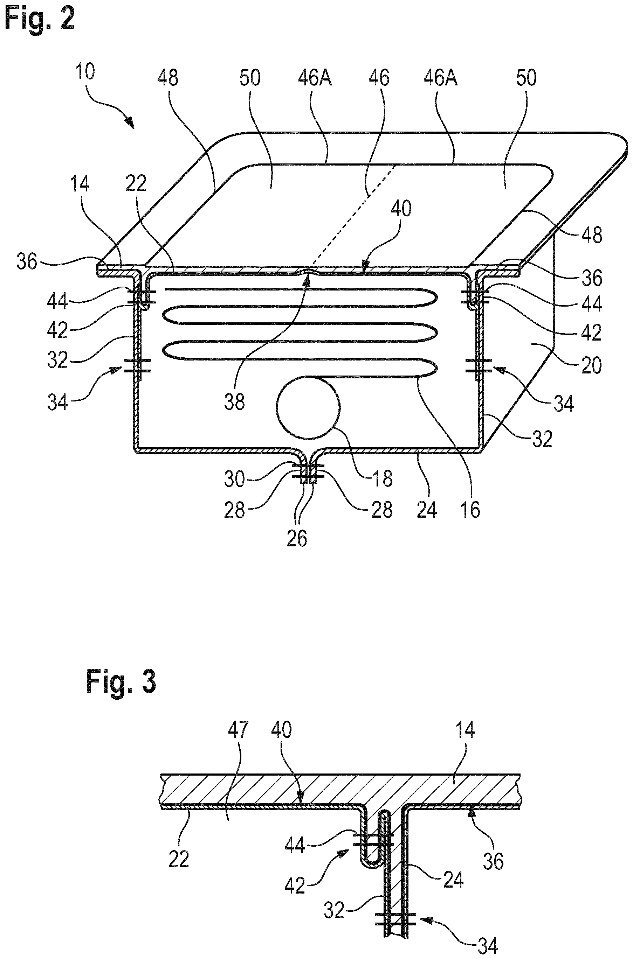

The gas bag system 10 contains a gas bag 16 rolled or folded into a package and an inflator 18, providing filling gas for deploying the gas bag 16 in case of an accident (see Fig. 2). The gas bag 16 and the inflator 18 are accommodated in a fabric housing 20 consisting of a fabric and forming an enclosure for the gas bag 16 and the inflator 18.

Alternatively, the inflator 18 is arranged partly or completely outside of the housing 20 but attached thereto. In case the inflator 18 is arranged completely outside the housing, a gas conduit between the inflator 18 and the gas bag 16 is provided. In case the inflator 18 extends partly into the gas bag 16 this protruding portion contains outflow openings for gas.

The housing 20 is made of a first fabric element 22 and a second fabric element 24 permanently connected therewith. The first fabric element 22 and the second fabric element 24 are formed from separate textile cuttings. The first fabric element 22 and the second fabric element 24 may be made out of a woven polyamide fabric, for example a woven PA6.6 fabric.

In the embodiment shown, the second fabric element 24 is formed of two mirror symmetrical cuttings that are permanently connected at their inner free ends that form attachment sections 26 at second fabric connection sections 28 by a permanent seam 34 after inserting the gas bag 16 and the inflator 18 into the housing 20.

The first fabric element 22 is connected to the second fabric element 24 at opposite ends forming connection sections 32 by permanent seams 34. The connection sections 32 and the seams 34 are arranged so that outer free ends of the second fabric element 24 extend beyond the connection sections 32 on both sides of the first fabric element 22.

These outer free ends of the second fabric element 24 are designated as attachment sections 36, as will be explained later.

The first fabric element 22 has a weakened zone 38 in a central area 40 that is arranged laterally between its connection sections 32. The weakened zone 38 is intended to rupture on deployment of the gas bag 16 and contains e.g. a line of perforations.

Between the weakened zone 38 and each connection section 32, a hinge section 42 is provided in which the first fabric element 22 is folded into an S-shaped folded section. The S-shape is connected to itself by the rupturable fixation 44, e.g. a seam. The rupturable fixation 44 will release the surplus of the first fabric element 22 that is stored in the S-shape, during opening of the flaps 50.

Optionally, the rupturable fixation 44 can also extend through the second fabric element 24.

For mounting the gas bag system 10 beneath and to the instrument panel 12, the central area 40 of the first fabric element as well as both attachment sections 36 of the second fabric element 24 are overmolded with or embedded in the plastic material of the plastic material cover 14. More in particular, these sections of the fabric housing are back injected with a plastic, for example PET.

For instance, the housing 20 consists, apart from the section on the front side being overmolded or embedded by plastic, of two fabric elements 22, 24, only, i.e. there are no plastic or metal parts for further holding the gas bag 16 or stabilizing the housing 20.

The intended shape of the surface of the instrument panel 12 determines the contour of the central area 40 of the first fabric element 22 and the attachment sections 36 of the second fabric element 24. In most cases, the contour will be plane or slightly convex as it is known from common instrument panels in vehicles.

In this example, in the instrument panel 12, a predetermined split line 46 is provided that opens on deployment of the gas bag 16 to create a deployment opening 47 for the gas bag 16. The split line 46 might also be arranged alternatively or additionally in the plastic material cover 14.

The embodiment shown in Figure 2 comprises a so-called H-shape opening which means that it comprises additional split lines, viz. the legs of the H along which the flaps open.

In this example, on both sides of the split line 46 a hinge line 48 is formed, allowing parts of the instrument panel 12 to pivot as flaps 50 to create the deployment opening 47. After deployment, the flaps remain attached to the instrument panel only via the hinge lines 48.

The weakened zone 38 in the first fabric element 22 is positioned at the split line 46, while the hinge sections 42 are positioned at the hinge lines 48 when seen in top of the instrument panel 12.

In case of an accident, the inflator 18 provides filling gas and starts to fill the gas bag 16. Due to the increasing internal pressure, the weakened zone 38 in the first fabric element 22 and the split line 46 in the instrument panel 12 are ruptured and the flaps 50 are pushed out towards the vehicle's interior, pivoting about their respective hinge line 48 and creating the deployment opening 47.

The gas bag 16 deploys through the deployment opening 47 into the vehicle's interior.

The flaps 50 stay connected with the housing 20 and the instrument panel 12 by means of the first fabric element 22, more in particular by the hinge sections 42 and the second fabric element 24 of the housing 20 by means of the connection to the first fabric element 22.

The rupturable fixations 44 of the hinge sections 42 are intended to rupture so that the hinge lines 48 in the flaps 50 gain more play for pivoting away from the deployment opening 47. In other embodiments, the hinge section of the second fabric element may not be S-shape folded and there may be no fixations 44.

The fixations 44 can e.g. be tear seams.

The housing 20 is further secured to the instrument panel 12 by the attachment sections 36 that are embedded in the plastic material cover 14. The forces resulting from deployment of the gas bag 16 are introduced into the instrument panel 12 and distributed therein.

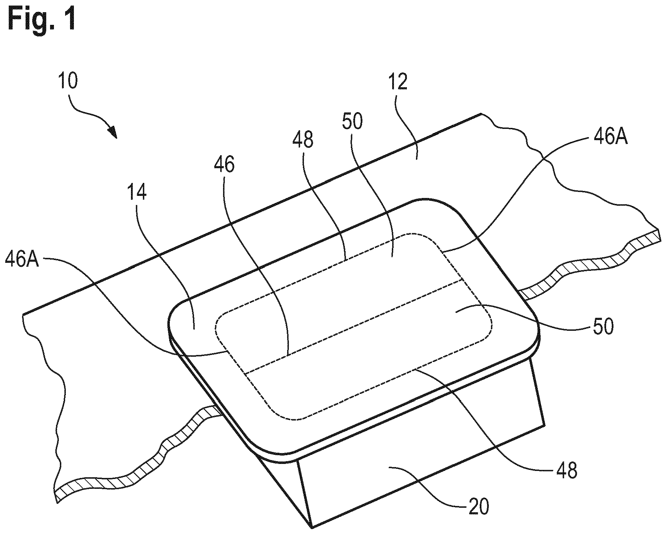

During deployment of the gas bag 16, the interior panel 12 will usually not only break at a split line 46 but in addition also at further breaking lines. Such further breaking lines may be the legs 46A of a H- shaped flap shown in Figure 1. In a U-shaped flap, the split line will be the bottom of the U and the further breaking lines will be the two legs of the U. Also other shapes are possible, for example an Y-shape in which in addition to a split line at least one further breaking line is present. In this case, position and shape of the weakened zone 38 and of the central area 40 of the first fabric element 22, of the hinge lines 48 and the hinge sections 42 have to be adjusted accordingly.

It would also be possible to provide only a single flap 50, corresponding to a single hinge line 48 and a single hinge section 42 or more than two flaps 50, hinge lines 48 and hinge sections 42.

## Claims

1. A gas bag system for being mounted at an interior panel (12) of a vehicle, comprising:
a fabric housing (20) for receiving a gas bag (16), the fabric housing (20) comprising a first fabric element (22) and a second fabric element (24),
wherein a connection section of the first fabric element (22) is connected to the second fabric element (24), and
**characterized in that** the first fabric element (22) contains a weakened zone (38) being aligned with a predetermined split line (46) in the plastic material cover (14) that is designed to form at least one flap (50) for providing a deployment opening (47) in the fabric housing (20) for releasing the gas bag (16) in case of deployment of the gas bag (16), and
at least a central area (40) of the first fabric element (22) is embedded in or overmolded with a plastic material cover (14), and
an attachment section (36) at an end section of the second fabric element is embedded in or overmolded with the plastic material cover (14).

2. The gas bag system according to claim 1, **characterized in that** the first fabric element (22) and the second fabric element (24) are separate elements before being connected.

3. The gas bag system according to any of the preceding claims, **characterized in that** the weakened zone (38) of the first fabric element (22) is woven differently from other zones of the first fabric element (22).

4. The gas bag system according to any of the preceding claims, **characterized in that** the plastic material cover (14) is part of the interior panel (12), preferably the part which defines a carrier part of the interior panel (12) so that the housing (20) is fixed to the interior panel (12).

5. The gas bag system according to any of the preceding claims, **characterized in that** at least one hinge section (42) is provided in the first fabric element (22) between the central area (40) and the connection section (32), the hinge section (42) being aligned with a predetermined hinge line (48) of the flap (50) in the interior panel.

6. The gas bag system according to claim 5, **characterized in that** the hinge section (42) comprises an S-shaped folded section, the S-shaped folded section being fixed in an S-shape prior to deployment of the gas bag.

7. The gas bag system according to claim 6, **characterized in that** two S-shaped folded sections are provided in two hinge sections (42) on opposite sides of the weakened zone (38), each S-shaped folded section being arranged between a connection section (32) and the central area (40) of the first fabric element (22), and each S-shaped folded section being aligned with one of the hinge lines (48) in the interior panel.

8. The gas bag system according to any of the preceding claims, **characterized in that** the second fabric element (24) comprises two fabric parts that form attachment sections (26) that can be attached to each other after a gas bag (16) has been inserted in the housing (20).

9. The gas bag system according to any of the preceding claims, **characterized in that** the gas bag system (10) comprises a gas bag (16) arranged in the fabric housing (20) and an inflator (18).

## Patentansprüche

1. Gassacksystem zur Montage an einem Innenpaneel (12) eines Fahrzeugs, mit:
einem Gewebegehäuse (20) zur Aufnahme eines Gassacks (16), wobei das Gewebegehäuse (20) ein erstes Gewebeelement (22) und ein zweites Gewebeelement (24) umfasst,
wobei ein Verbindungsabschnitt des ersten Gewebeelements (22) mit dem zweiten Gewebeelement (24) verbunden ist, und
**dadurch gekennzeichnet, dass** das erste Gewebeelement (22) eine geschwächte Region (38) enthält, die auf eine vorbestimmte Teilungslinie (46) in der Kunststoffabdeckung (14) ausgerichtet ist, die so konstruiert ist, dass sie wenigstens eine Klappe (50) zur Bereitstellung einer Entfaltungsöffnung (47) im Gewebegehäuse (20) bildet, um den Gassack (16) im Falle einer Entfaltung des Gassacks (16) freizugeben, und
wenigstens ein mittiger Bereich (40) des ersten Gewebeelements (22) in eine Kunststoffabdeckung (14) eingebettet oder mit dieser umspritzt ist und
ein Befestigungsabschnitt (36) an einem Endabschnitt des zweiten Gewebeelements in die Kunststoffabdeckung (14) eingebettet oder mit dieser umspritzt ist.

2. Gassacksystem nach Anspruch 1, **dadurch gekennzeichnet, dass** das erste Gewebeelement (22) und das zweite Gewebeelement (24) getrennte Elemente sind, bevor sie verbunden werden.

3. Gassacksystem nach einem der vorhergehenden Ansprüche, **dadurch gekennzeichnet, dass** die geschwächte Region (38) des ersten Gewebeelements (22) anders gewebt ist als andere Regionen des ersten Gewebeelements (22).

4. Gassacksystem nach einem der vorhergehenden Ansprüche, **dadurch gekennzeichnet, dass** die Kunststoffabdeckung (14) Teil des Innenpaneels (12) ist, vorzugsweise der Teil, der einen Trägerteil des Innenpaneels (12) bildet, so dass das Gehäuse (20) am Innenpaneel (12) befestigt ist.

5. Gassacksystem nach einem der vorhergehenden Ansprüche, **dadurch gekennzeichnet, dass** im ersten Gewebeelement (22) zwischen dem mittleren Bereich (40) und dem Verbindungsabschnitt (32) wenigstens ein Scharnierabschnitt (42) vorgesehen ist, wobei der Scharnierabschnitt (42) auf eine vorbestimmte Scharnierlinie (48) der Klappe (50) im Innenpaneel ausgerichtet ist.

6. Gassacksystem nach Anspruch 5, **dadurch gekennzeichnet, dass** der Scharnierabschnitt (42) einen S-förmig gefalteten Abschnitt umfasst, wobei der S-förmig gefaltete Abschnitt vor dem Entfalten des Gassacks in einer S-Form fixiert ist.

7. Gassacksystem nach Anspruch 6, **dadurch gekennzeichnet, dass** in zwei Scharnierabschnitten (42) auf entgegengesetzten Seiten der geschwächten Region (38) zwei S-förmig gefaltete Abschnitte vorgesehen sind, wobei jeder S-förmig gefaltete Abschnitt zwischen einem Verbindungsabschnitt (32) und dem mittleren Bereich (40) des ersten Gewebeelements (22) angeordnet ist und jeder S-förmig gefaltete Abschnitt auf eine der Scharnierlinien (48) im Innenpaneel ausgerichtet ist.

8. Gassacksystem nach einem der vorhergehenden Ansprüche, **dadurch gekennzeichnet, dass** das zweite Gewebeelement (24) zwei Gewebeteile umfasst, die Befestigungsabschnitte (26) bilden, die aneinander befestigt werden können, nachdem ein Gassack (16) in das Gehäuse (20) eingesetzt worden ist.

9. Gassacksystem nach einem der vorhergehenden Ansprüche, **dadurch gekennzeichnet, dass** das Gassacksystem (10) einen im Gewebegehäuse (20) angeordneten Gassack (16) und einen Gasgenerator (18) umfasst.

## Revendications

1. Système de coussin à gaz pour le montage sur un panneau intérieur (12) d'un véhicule, comprenant :
un boîtier en tissu (20) pour le logement d'un coussin à gaz (16), le boîtier en tissu (20) comprenant un premier élément en tissu (22) et un deuxième élément en tissu (24),
un tronçon de liaison du premier élément en tissu (22) étant relié au deuxième élément en tissu (24), et
**caractérisé en ce que** le premier élément en tissu (22) comprend une région affaiblie (38) alignée sur une ligne de division prédéterminée (46) dans le recouvrement en matière plastique (14), qui est réalisé de manière à former au moins un volet (50) pour fournir une ouverture de déploiement (47) dans le boîtier en tissu (20) afin de libérer le coussin à gaz (16) dans le cas d'un déploiement du coussin à gaz (16), et
au moins une zone médiane (40) du premier élément en tissu (22) est encastrée dans ou surmoulée sur un recouvrement en matière plastique (14), et
un tronçon de fixation (36) à un tronçon d'extrémité du deuxième élément en tissu est encastré dans ou surmoulé sur le recouvrement en matière plastique (14).

2. Système de coussin à gaz selon la revendication 1, **caractérisé en ce que** le premier élément en tissu (22) et le deuxième élément en tissu (24) sont des éléments séparés avant d'être reliés.

3. Système de coussin à gaz selon l'une des revendications précédentes, **caractérisé en ce que** la région affaiblie (38) du premier élément en tissu (22) est tissée différemment des autres régions du premier élément en tissu (22).

4. Système de coussin à gaz selon l'une des revendications précédentes, **caractérisé en ce que** le recouvrement en matière plastique (14) fait partie du panneau intérieur (12), de préférence la partie qui définit une partie de support du panneau intérieur (12), de sorte que le boîtier (20) est fixé au panneau intérieur (12).

5. Système de coussin à gaz selon l'une des revendications précédentes, **caractérisé en ce qu'**au moins un tronçon de charnière (42) est prévu dans le premier élément en tissu (22) entre la zone médiane (40) et le tronçon de liaison (32), le tronçon de charnière (42) étant aligné sur une ligne de charnière prédéterminée (48) du volet (50) dans le panneau intérieur.

6. Système de coussin à gaz selon la revendication 5, **caractérisé en ce que** le tronçon de charnière (42) comprend un tronçon plié en S, le tronçon plié en S étant fixé en S avant le déploiement du coussin à gaz.

7. Système de coussin à gaz selon la revendication 6, **caractérisé en ce que** deux tronçons pliés en S sont prévus dans deux tronçons de charnière (42) sur des côtés opposés de la région affaiblie (38), chaque tronçon plié en S étant agencé entre un tronçon de liaison (32) et la zone médiane (40) du premier élément en tissu (22), et chaque tronçon plié en S étant aligné sur l'une des lignes de charnière (48) dans le panneau intérieur.

8. Système de coussin à gaz selon l'une des revendications précédentes, **caractérisé en ce que** le deuxième élément en tissu (24) comprend deux parties en tissu qui forment des tronçons de fixation (26) qui sont aptes à être fixés l'un à l'autre après l'insertion d'un coussin à gaz (16) dans le boîtier (20).

9. Système de coussin à gaz selon l'une des revendications précédentes, **caractérisé en ce que** le système de coussin à gaz (10) comprend un coussin à gaz (16) agencé dans le boîtier en tissu (20) et un générateur de gaz (18).
